(19) Europäisches Patentamt

European Patent Office

Office européen des brevets

(11) Veröffentlichungsnummer: **0 528 193 B1**

# (12) EUROPÄISCHE PATENTSCHRIFT

(45) Veröffentlichungstag der Patentschrift: **24.05.95**

(51) Int. Cl.6: **F16C 33/60**, F16C 33/64

(21) Anmeldenummer: **92112483.0**

(22) Anmeldetag: **21.07.92**

(54) **Dünnringlager mit Trennstelle und Verfahren zum Herstellen eines solchen Lagers.**

(30) Priorität: **16.08.91 DE 4127213**

(43) Veröffentlichungstag der Anmeldung:
**24.02.93 Patentblatt 93/08**

(45) Bekanntmachung des Hinweises auf die
Patenterteilung:
**24.05.95 Patentblatt 95/21**

(84) Benannte Vertragsstaaten:
**DE ES FR GB IT NL SE**

(56) Entgegenhaltungen:
EP-A- 0 319 842      DE-A- 1 602 446
DE-A- 2 460 120      DE-A- 3 248 634
GB-A- 417 774        GB-A- 999 526
US-A- 3 229 353      US-A- 4 073 551

"Dünnringlager", Kaydon Corporation, Katalog 300 D, 2500-8410

(73) Patentinhaber: **Fried. Krupp AG Hoesch-Krupp**
**Eberhardstrasse 12**
**D-44145 Dortmund (DE)**

(72) Erfinder: **Bracht, Josef**
**Gografenstrasse 16**
**W-4782 Erwitte (DE)**
Erfinder: **Gonschorek, Gerhard, Dipl.-Ing.**
**Ostdeutscher Ring 28**
**W-4780 Lippstadt-Benninghausen (DE)**
Erfinder: **Röling, Horst, Dipl.-Ing.**
**Otterweg 11**
**W-4700 Hamm (DE)**
Erfinder: **Stenert, Alois**
**Robert-Stolz-Strasse 4**
**W-4780 Lippstadt (DE)**
Erfinder: **Wozniak, Johannes, Dr.**
**Moorkampstrasse 5**
**W-4780 Lippstadt-Lipperode (DE)**
Erfinder: **Jacob, Werner, Dipl.-Ing.**
**Briandring 29**
**W-6000 Frankfurt/Main 70 (DE)**

## Beschreibung

Die Erfindung betrifft ein Verfahren zur Herstellung von Lagerringen, nach dem Oberbegriff des Anspruchs 1 sowie ein Dünnringlager und eine Lageranordnung mit derartigen Lagerringen. Dünnringlager sind vollwertige Wälzlager mit Innenring, Außenring und zwischen diesen angeordneten Wälzkörpern, wobei der Lagerquerschnitt im Verhältnis zum Durchmesser und im Verhältnis zur Wälzkörpergröße geringstmögliche Abmessungen hat. Der Lagerquerschnitt ist vorzugsweise quadratisch gestaltet. Die Durchmesserverhältnisse bestimmen sich nach der Formel $(D - d) \times 0{,}25 \leq Dw$, wobei $D$ = Lageraußendurchmesser, $d$ = Lagerinnendurchmesser und $Dw$ = Wälzkörperdurchmesser sind.

Trotz ihrer geringen Lagerquerschnitte weisen Dünnringlager im Vergleich zu normalen Wälzlagern eine gleichhohe Genauigkeit hinsichtlich Lagerabmessungen, Rundlaufgenauigkeit und Höhenschlag auf. Das bedingt eine aufwendige Fertigung. Die Lagerringe für Dünnringlager werden vorzugsweise aus Rohrmaterial hergestellt und ihre Kontur wird vollständig mechanisch bearbeitet.

Nach der DE-A-3 248 634 ist ein Verfahren zum Herstellen von Rohlingen für Lagerringe bekannt, welche ausgehend von einem Band kreisringförmig gebogen, alternativ auch profiliert und anschließend an den Stoßkanten verbunden, vorzugsweise verschweißt werden. Danach werden die dann geschlossenen Rohlinge entgratet und zu Lagerringen weiterbearbeitet.

Nach der EP-A-0 319 842 ist es weiterhin bekannt, Wälzlagerringe aus profiliertem Material zu Biegen und als geschlitzte Ringe zu verwenden. Diese Ringe sind jedoch nicht wärmebehandelt und weisen damit eine geringere Werkstoffhärte auf.

Der Erfindung liegt die Aufgabe zu Grunde ein Herstellungsverfahren zu finden, daß dazu geeignet ist, auch Ringe für Dünnringlager mit wenigstens einer Trennstelle herzustellen, wobei die hohen Genauigkeiten für diese Ringe eingehalten werden.

Diese Aufgabe wird erfindungsgemäß durch die Merkmale des Anspruchs 1 gekennzeichnet. Vorteilhafte Weiterbildungen sind in den Ansprüchen 2 bis 6 beschrieben. Anspruch 7 beschreibt ein Dünnringlager mit nach diesem Verfahren hergestellten Lagerringen. Anspruch 8 beschreibt eine Lageranordnung mit einem Dünnringlager mit nach dem erfindungsgemäßen Verfahren hergestellten Lagerringen.

Die mit der Erfindung erzielten Vorteile bestehen insbesondere in der kostengünstigeren Herstellung von Dünnringlagern nach dem Oberbegriff des Anspruchs 1. Besonders durch das gleichzeitige Biegen und Härten wird nicht nur eine wirtschaftliche Fertigung erreicht, sondern werden vorteilhaft überhaupt erst die für Dünnringlager erforderliche Genauigkeit in Bezug auf Rundheit und Höhenschlag erzielt. Dabei werden derartige Dünnringlager für untergeordnete Einsatzfälle ohne spanabhebende Bearbeitung nach Ansprüchen 1 und 2 bevorzugt eingesetzt. Beim Herstellungsverfahren nach Anspruch 3, bei dem eine spanabhebende Bearbeitung der Laufbahnen erfolgt, werden höchste Genauigkeiten hinsichtlich Rundlauf und Höhenschlag sowie sämtlicher Lagerabmessungen erzielt. Nach diesem Verfahren werden in einfacher Weise qualitativ höchstwertige Dünnringlager hergestellt. Besonders vorteilhaft ermöglichen die erfindungsgemäßen Lager eine 100-%ige Wälzkörperfüllung, was gegenüber bisherigen Dünnringlagern eine Verdoppelung des Tragvermögens bewirkt.

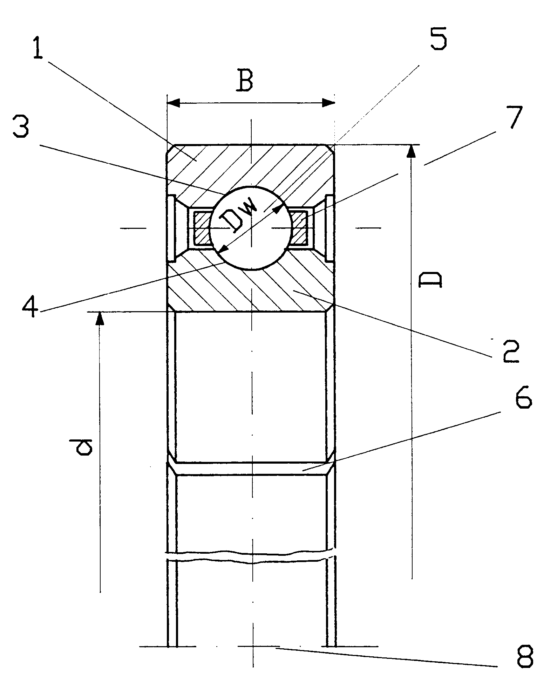

Ein Ausführungsbeispiel der Erfindung ist in der Zeichnung dargestellt und wird im folgenden näher beschrieben. Die Zeichnung zeigt einen Schnitt durch eine Lagerhälfte.

Das Lager besitzt einen Außenring 1 und einen Innenring 2, zwischen denen auf Laufbahnen 3, 4 Wälzkörper 5 angeordnet sind. Außenring 1 und Innenring 2 weisen jeweils wenigstens eine Trennstelle 6 auf. Der Lagerquerschnitt ist quadratisch, d.h. die Hälfte der Differenz von Lageraußendurchmesser D und Lagerinnendurchmesser d entspricht der Lagerbreite B. Da im Ausführungsbeispiel der Wälzkörperdurchmesser Dw größer ist als 1/4 der Differenz von Lageraußendurchmesser D und Lagerinnendurchmesser d, handelt es sich beim beschriebenen Lager um ein Dünnringlager.

Als Wälzkörper 5 sind Kugeln eingesetzt, die durch einen kammartig ausgebildeten Käfig 7 getrennt und geführt werden. Zum Abdichten des Wälzsystems gegenüber Schmutz von Außen bzw. austretendes Schmiermittel von Innen, kann das Lager mit nicht dargestellten Dichtungen zwischen Außenring 1 und Innenring 2 ausgebildet sein.

Die Lagerringe 1, 2 werden, ausgehend von fertigprofiliertem oder vorprofiliertem Stangenmaterial hergestellt. Dieses wird auf Schmiedetemperatur erwärmt und beispielsweise über eine Rollbiegmaschine zu Wendeln des erforderlichen Durchmessers gebogen. Wenn von vorprofiliertem Material ausgegangen wird, wird bei diesem Arbeitsgang die Lagerringendform, insbesondere die Endform der Laufbahn 3, 4, durch Formrollen erzeugt. Das Härten erfolgt direkt aus der Umformwärme durch anschließendes Abschrecken mittels einer geeigneten Abschreckflüssigkeit. Nach diesem Arbeitsgang erfolgt das Trennen, um aus dem Wendel einzelne Lagerringe herzustellen. Um die erforderliche Genauigkeit hinsichtlich Höhenschlag und Rundlauf zu erzielen, ist ein Richten erforderlich, wobei vorzugsweise lediglich ein Richten der vorbereiteten Lagerringe in Richtung der Lagerachse 8 erforderlich ist. Durch anschließendes oder gleichzeitiges Anlassen erhält das Lagermaterial die erforderliche Zähigkeit. Nach dieser Bearbeitung weisen die Lagerringe eine, für den Fachmann überraschend große Genauigkeit hinsichtlich Rundlauf und Höhenschlag auf. Für Lager mit höchster Genauigkeit schließt sich an die vorbeschriebenen Arbeitsgänge noch ein Schleifen der Laufbahnen 3, 4 an. Die übrigen Flächen der Lagerringe, insbesondere der Lageraußendurchmesser D, der Lagerinnendurchmesser d und die Seitenflächen müssen nicht mehr nachbearbeitet werden.

Die Wälzkörper können in bekannter Weise beispielsweise über Konrad-Füllung zwischen Außenring 1 und Innenring 2 eingebracht werden. Dabei wird ein Füllungsgrad von 50 % erzielt. Da jedoch der Außenring 1 eine Trennstelle 6 aufweist, ist auch eine größere Füllung des Lagers mit Wälzkörpern zu erzielen. Dabei wird der Außenring 1 örtlich an der Trennstelle 6 elastisch abgebogen, so daß hier eine ausreichende Öffnung zum Einbringen der Wälzkörper vorgesehen ist. Damit kann ein Füllungsgrad von bis zu 100 % erreicht werden.

Je nach Erfordernissen wird anschließend ein Käfig 7 zwischen die Wälzkörper eingebracht. Das Lager kann abschließend mit Dichtungen abgeschlossen werden.

Alternativ kann die Montage über einen bereits mit Wälzkörpern 5 befüllten Bandkäfig erfolgen, der direkt zwischen die Laufringe 1, 2 geschoben wird.

Durch Bestückung mit Wälzkörper 5 einer geeigneten Sortierung (Übermaß oder Untermaß) können die Fertigungstoleranzen des Lagers bezüglich der Durchmesser D, d und der Laufbahnen 3, 4 ausgeglichen werden. Je nach Erfordernis kann dadurch eine Verspannung des Lagers entsprechend Anspruch 2 erreicht werden.

Darüber hinaus ist es sogar möglich Toleranzfehler der Bohrung oder des Sitzes der Anschlußteile auszugleichen, da sich die Wälzkörperdurchmesser Dw auf die Lagerdurchmesser D, d auswirken, weil die Lagerringe 1, 2 eine Trennstelle 6 haben.

Diese Maßnahme ist auch noch zum Zeitpunkt des Lagereinbaus möglich, wenn erst dann die angepaßten Wälzkörper 5 in die Lagerringe 1, 2 eingesetzt werden.

Bezugszeichen

|   |   |
|---|---|
| D | Lageraußendurchmesser |
| d | Lagerinnendurchmesser |
| Dw | Wälzkörperdurchmesser |
| B | Lagerbreite |
| 1 | Außenring |
| 2 | Innenring |
| 3 | Laufbahn |
| 4 | Laufbahn |
| 5 | Wälzkörper |
| 6 | Trennstelle |
| 7 | Käfig |
| 8 | Lagerachse |

**Patentansprüche**

1. Verfahren zum Herstellen von Lagerringen (1, 2) mit wenigstens einer Trennstelle (6) für Dünnringlager mit einem rechteckigen, vorzugsweise quadratischen Lagerquerschnitt, **dadurch gekennzeichnet**, daß ein Profilstab auf Schmiedetemperatur erwärmt, zu einer Wendel gebogen und durch anschließendes Abschrecken aus der Umformwärme gehärtet, die Wendel anschließend getrennt, gerichtet und angelassen wird und die Laufbahnen (3,4) nachfolgend oder gleichzeitig einer spanabhebende oder spanlosen Bearbeitung unterzogen werden.

2. Verfahren nach Anspruch 1, **dadurch gekennzeichnet**, daß die Laufbahnen (3, 4) beim Biegen und Härten durch Profilierwalzen geformt werden.

3. Verfahren nach Anspruch 1 oder Anspruch 2, **dadurch gekennzeichnet**, daß die Laufbahnen (3, 4) nach dem Trennen, Richten und Anlassen durch Schleifen ihre Endform erhalten.

4. Verfahren nach Anspruch 1 oder Anspruch 2, **dadurch gekennzeichnet**, daß das Richten und das Anlassen in einem Arbeitsgang erfolgt.

5. Verfahren nach einem oder mehreren der Ansprüchen 1 bis 4, **dadurch gekennzeichnet**, daß das Richten lediglich in Richtung der Lagerachse (8) erfolgt.

6. Verfahren nach einem oder mehreren der Ansprüche 1 bis 5, **dadurch gekennzeichnet**, daß die Lagerringe (1, 2) mit schräg verlaufenden Trennstellen (6) ausgebildet werden.

7. Dünnringlager mit nach einem oder mehreren der Ansprüche 1 bis 6 hergestellten Lagerringen, **gekennzeichnet** durch eine vollständige Füllung mit Wälzkörpern (5).

8. Lageranordnung mit einem Dünnringlager mit nach einem oder mehreren der Ansprüche 1 bis 6 hergestellten Lagerringen oder mit einem Dünnringlager nach Anspruch 7, **dadurch gekennzeichnet**, daß der Außendurchmesser (D) des Lagers geringfügig größer ist als unter Berücksichtigung des vollständigen Toleranzfeldes die Innenbohrung der kooperierenden Anschlußkonstruktion und/oder der Innendurchmesser (d) des Lagers geringfügig kleiner ist als unter Berücksichtigung des vollständigen Toleranzfeldes der Außendurchmesser der kooperierenden Anschlußkonstruktion.

## Claims

1. A method for manufacturing bearing rings (1,2) comprising at least one separation point (6) for thin ring bearings having a rectangular, preferably quadratic bearing cross-section, characterised in that a profiled rod is heated to a forging temperature, curved to form a spiral and hardened by virtue of subsequently being cooled down from the temperature at which it is reshaped, and the spiral is then separated, straightened and annealed and the running paths (3, 4) are subsequently or simultaneously machined either by removing metal or not removing metal.

2. A method according to claim 1, characterised in that during the curving and hardening processes the running paths (3, 4) are formed by virtue of profiled rollers.

3. A method according to claim 1 or claim 2, characterised in that the running paths (3, 4) obtain their final shape by being ground after the separating, straightening and annealing processes.

4. A method according to claim 1 or claim 2, characterised in that the straightening process and the annealing process are carried out in one procedure.

5. A method according to one or several of claims 1 to 4, characterised in that the spiral is straightened only in the direction of the bearing axis (8).

6. A method according to one or several of claims 1 to 5, characterised in that the bearing rings (1, 2) are formed with chamfered separation points (6).

7. A thin ring bearing comprising bearing rings produced according to one or several of claims 1 to 6, characterised by being completely filled with roller bodies (5).

8. A bearing arrangement comprising a thin ring bearing having bearing rings manufactured according to one or several of claims 1 to 6 or comprising a thin ring bearing according to claim 7, characterised in that the outer diameter (D) of the bearing is slightly larger when taking into consideration the complete tolerance field than the internal bore of the co-operating connection construction and/or the internal diameter (d) of the bearing is slightly smaller when taking into consideration the complete tolerance field than the outer diameter of the co-operating connection construction.

## Revendications

1. Procédé de fabrication de bagues de palier (1, 2) présentant au moins une fente (6), pour palier à bagues minces avec une section transversale de palier rectangulaire, de préférence carrée, caractérisé en ce qu'un barreau profilé est chauffé jusqu'à la température de forgeage, est cintré en hélice et est ensuite trempé par élimination brusque de la chaleur de déformation, l'hélice est ensuite découpée, dressée et soumise à revenu, et les chemins de roulement (3, 4) sont ensuite ou simultanément soumis à un usinage avec ou sans enlèvement de matière.

2. Procédé selon la revendication 1, caractérisé en ce que les chemins de roulement (3, 4) sont façonnés par des cylindres à profiler pendant le cintrage et la trempe.

3. Procédé selon la revendication 1 ou la revendication 2, caractérisé en ce que les chemins de roulement (3, 4) reçoivent leur forme finale par rectification après le découpage, le dressage et le revenu.

4. Procédé selon la revendication 1 ou la revendication 2, caractérisé en ce que le dressage et le revenu s'effectuent en une seule opération.

5. Procédé selon l'une ou plusieurs des revendications 1 à 4, caractérisé en ce que le dressage ne s'effectue que dans la direction de l'axe (8) du palier.

6. Procédé selon une ou plusieurs des revendications 1 à 5, caractérisé en ce que les bagues de palier (1, 2) sont réalisées avec des fentes (6) s'étendant en oblique.

7. Palier à bagues minces selon une ou plusieurs des revendications 1 à 6, caractérisé par un remplissage complet par des éléments de roulement (5).

8. Agencement de palier présentant un palier à bagues minces réalisées selon l'une ou plusieurs de revendications 1 à 6, ou avec un palier à bagues minces selon la revendication 7, caractérisé en ce que le diamètre extérieur (D) du palier est légèrement plus grand que l'alésage intérieur de la structure de raccordement qui coopère avec lui, compte tenu de la plage totale de tolérance, et/ou en ce que le diamètre intérieur (d) du palier est légèrement plus petit que le diamètre extérieur de la structure de raccordement qui coopère avec lui, compte tenu de la plage totale de tolérance.